# DEMANDE DE BREVET EUROPEEN

(11) **EP 1 783 066 A2**
(43) Date de publication de la demande: **09.05.2007**
(21) Numéro de dépôt: 07001435.2
(22) Date de dépôt: 30.10.1991
(51) Int. Cl.: B65D 85/804, A47J 31/40

(54) **Procédé de préparation d'un produit liquide et dispositif pour sa mise en oeuvre**

(30) Priorité: 31.10.1990 CH 345990; 10.04.1991 CH 105891
(62) Demande divisionnaire de: 91917946.5
(71) Demandeur: Monodor S.A., 1041 St. Barthélemy (CH)
(72) Inventeur: Favre, Eric, 1041 Saint Barthelemy (CH)
(74) Mandataire: Reuteler, Raymond Werner

(57) **Abrégé**

Cartouche contenant une dose d'au moins une substance pour la préparation d'un produit liquide au moyen d'un liquide et/ou d'une vapeur introduits sous pression dans la cartouche. La cartouche comprend une enveloppe étanche formant une paroi latérale ainsi que deux parois dont l'une constitue le fond de la cartouche et dont l'autre ferme l'extrémité opposée de la cartouche. Le fond de la cartouche est agencée de manière à pouvoir subir, sans se rompre, une déformation, en s'éloignant, sous l'effet de l'introduction dudit liquide et/ou vapeur à l'intérieur de la cartouche, de l'extrémité de la cartouche opposée au fond de celle-ci.

## Description

L'invention concerne un procédé de préparation d'un produit liquide ainsi qu'un dispositif pour la mise en oeuvre de ce procédé. Plus précisément, l'invention porte sur un procédé de préparation d'un produit liquide, selon lequel on introduit un liquide et/ou une vapeur sous pression dans une cartouche, contenant une dose d'au moins une substance, apte à former ledit produit au moyen dudit liquide et/ou vapeur, et on recueille ce produit à l'extérieur de la cartouche ainsi que sur un dispositif comprenant un appareil et une cartouche pour la préparation d'un produit liquide par introduction, sous pression, d'un liquide et/ou d'une vapeur dans une cartouche contenant une dose d'au moins une substance apte à former ledit produit au moyen dudit liquide et/ou vapeur, cet appareil comprenant des moyens d'alimentation de la cartouche en liquide et/ou vapeur ainsi que des moyens pour recueillir le produit liquide à l'extérieur de la cartouche. L'invention porte, en particulier, sur une cartouche contenant une dose d'au moins une substance pour la préparation d'un produit liquide au moyen d'un liquide et/ou une vapeur introduit sous pression dans la cartouche, cette cartouche comprenant une enveloppe étanche formant une paroi latérale ainsi que deux parois dont l'une constitue le fond de la cartouche et dont l'autre ferme l'extrémité opposée de la cartouche.

L'invention, a en particulier, pour objet une cartouche telle qu'indiquée ci-dessus, cette cartouche étant destinée à être utilisée pour préparer une boisson chaude ou froide, telle que du café, ou encore du chocolat au lait, ou un aliment liquide, tel qu'une soupe, au moyen d'un appareil de type usuel, tel qu'une machine à café, comprenant un dispositif permettant d'injecter un liquide tel que de l'eau chaude ou du lait chaud ou encore de la vapeur sous pression dans une certaine masse de substance pulvérulente, notamment des grains de café torréfiés moulus, afin d'extraire les substances solubles contenues dans la substance pulvérulente.

On connait déjà des cartouches de ce genre qui présentent notamment l'avantage de permettre de conserver la substance de départ à l'abri de l'atmosphère, éventuellement sous vide, et par conséquent de maintenir son état de fraicheur pendant une période prolongée.

L'invention a, notamment, pour but de fournir une cartouche du genre indiqué ci-dessus, agencée de manière telle qu'elle se prête à être fabriquée industriellement avec un faible prix de revient, tout en assurant une conservation parfaite de la substance qu'elle contient ainsi que des conditions optimales de préparation du produit liquide, en particulier en ce qui concerne la durée de contact de la substance pulvérulente avec le liquide fourni par l'appareil.

A cet effet, la cartouche selon l'invention est caractérisée par le fait qu'au moins une partie du fond de la cartouche est agencée de manière à pouvoir subir sans se rompre une déformation, d'une amplitude prédéterminée, en s'éloignant de l'extrémité de la cartouche opposée au fond de celle-ci, sous l'effet de l'introduction dudit liquide et/ou vapeur à l'intérieur de la cartouche.

L'invention a également pour objet une pièce collectrice de produit liquide pour la cartouche qui vient d'être mentionnée. Cette pièce collectrice est caractérisée par le fait qu'elle comprend au moins un logement délimité entre une ouverture pour l'introduction de la cartouche et une paroi traversée d'au moins un orifice pour le passage du produit liquide et munie de moyens pour perforer le fond de la cartouche, lorsque celui-ci_ a atteint un certain degré de déformation par rapport à sa forme initiale, en permettant l'écoulement dudit produit liquide à travers ledit orifice.

Enfin, l'invention a pour objet une pièce perforatrice et injectrice de liquide pour la cartouche susmentionnée, cette pièce faisant partie intégrante d'un appareil ou dispositif d'alimentation en liquide, ou étant agencée de manière à pouvoir être adaptée sur la partie d'un tel appareil ou dispositif par laquelle s'effectue l'alimentation en liquide, cette pièce étant caractérisée en ce qu'elle présente une paroi conformée pour pouvoir être mise en appui contre la paroi supérieure de la cartouche et des moyens pour pratiquer au moins une ouverture dans cette dernière lors de cette mise en appui, en mettant ainsi l'intérieur de la cartouche en communication avec au moins un canal d'injection de liquide provenant dudit appareil ou dispositif.

Conformément à une forme d'exécution particulièrement avantageuse, le fond de la cartouche forme une voute concave.

Il peut être, d'autre part, avantageux que la partie supérieure de la cartouche ait une forme bombée.

Il peut être, en particulier, souhaitable que le fond et la partie supérieure de la cartouche aient des formes complémentaires, de manière à permettre l'emboîtage d'une pluralité de cartouches empilées les unes sur les autres.

Conformément à une forme d'exécution particulière, le fond de la cartouche et/ou la paroi obturant la partie supérieure de la cartouche présentent au moins une partie affaiblie.

Il peut être avantageux que la cartouche comporte une cloison intérieure perméable aux liquide mais capable de retenir une substance pulvérulente contenue dans la cartouche.

Conformément à une autre forme d'exécution de la cartouche, celle-ci comporte une paroi supérieure agencée de manière à permettre d'enlever au moins une partie de cette paroi avant l'utilisation de la cartouche.

Avantageusement, la cartouche comprend une membrane poreuse agencée de manière à retenir la substance contenue dans la cartouche après enlèvement d'au moins une partie de la paroi supérieure de la cartouche.

Il peut être également avantageux que la cartouche soit munie d'une membrane intérieure filtrante placée au fond de la cartouche, de préférence juste au-dessus de la paroi du fond de celle-ci, en s'appuyant éventuellement au moins sur une partie de cette paroi et en étant fixée sur celle-ci et/ou sur la surface intérieure de la paroi latérale de la cartouche.

Conformément à une forme d'exécution particulière de la pièce collectrice, la paroi d'obturation du logement récepteur de la cartouche est traversée d'au moins un orifice d'écoulement prolongé, en direction de l'intérieur dudit logement, par une protubérance dont l'extrémité est terminée par une pointe ou une arête coupante, cette protubérance présentant au moins un canal d'écoulement de liquide en communication avec ledit orifice.

Avantageusement, dans cette forme d'exécution, ladite arête coupante a, vue en plan, une forme générale incurvée et, de préférence, une forme en C ou en fer à cheval.

Conformément à une forme d'exécution particulière de la pièce perforatrice et injectrice selon l'invention, lesdits moyens pour pratiquer ladite ouverture dans la paroi supérieure de la cartouche sont constitués par au moins une protubérance dont l'extrémité est munie d'au moins une pointe ou une arête coupante, cette ou ces protubérance (s) faisant saillie à partir de la paroi de la pièce perforatrice et injectrice, conformée pour venir en appui contre la paroi supérieure de la cartouche, et étant associée (s) avec au moins un canal d'injection de liquide traversant la pièce perforatrice et injectrice, de façon à permettre l'injection dans la cartouche du liquide délivré par ledit appareil ou dispositif d'alimentation.

Avantageusement, dans cette forme d'exécution, ladite protubérance est terminée par une pointe et elle présente un canal d'injection de liquide communiquant avec une pluralité de buses de projection de liquide orientées de manière à produire une série de jets de liquide dirigés selon plusieurs angles différents contre la surface intérieure de la paroi supérieure de la cartouche, après pénétration de ladite protubérance à l'intérieur de celle-ci.

Le procédé selon l'invention est caractérisé en ce que l'on place une cartouche, qui comprend une enveloppe étanche, formant une paroi latérale ainsi que deux parois dont l'une constitue le fond de la cartouche et l'autre ferme l'extrémité opposée de la cartouche, et dont au moins une partie du fond est agencée de manière à pouvoir subir, sans se rompre, une déformation, en s'éloignant de l'extrémité de la cartouche opposée au fond de celle-ci, sous l'effet de l'introduction dudit liquide et/ou vapeur, dans un logement d'une pièce collectrice, ce logement étant délimité entre une ouverture pour l'introduction de la cartouche et une paroi, traversée d'au moins un orifice pour le passage du produit liquide et munie de moyens pour perforer le fond de la cartouche, lorsque celui-ci a atteint un certain degré de déformation par rapport à sa forme initiale, et l'on introduit ensuite dans la cartouche une quantité prédéterminée dudit liquide et/ou vapeur, de manière à provoquer ladite déformation du fond de la cartouche et sa perforation par lesdits moyens, en permettant l'écoulement dudit produit liquide à travers ledit ou lesdits orifice(s).

L'ensemble formé de l'appareil et cartouche selon l'invention est caractérisé en ce que la cartouche comprend une enveloppe étanche, formant une paroi latérale ainsi que deux parois dont l'une constitue le fond de la cartouche et l'autre ferme l'extrémité opposée de la cartouche, au moins une partie du fond de la cartouche étant agencée de manière à pouvoir subir, sans se rompre, une déformation d'une amplitude prédéterminée, en s'éloignant de l'extrémité de la cartouche opposée au fond de celle-ci, sous l'effet de l'introduction dudit liquide et/ou vapeur, et en ce que lesdits moyens pour recueillir le produit liquide comprennent au moins une pièce collectrice comportant au moins un logement délimité entre une ouverture pour l'introduction de la cartouche et une paroi traversée d'au moins un orifice pour le passage du produit liquide et munie de moyens pour perforer le fond de la cartouche, lorsque celui-ci a atteint un certain degré de déformation par rapport à sa forme initiale.

On va maintenant donner une description détaillée, à titre d'exemple non limitatif, de formes d'exécution particulières de la cartouche selon l'invention ainsi que d'une pièce collectrice de produit liquide pour cette cartouche et d'une pièce perforatrice et injectrice de liquide pour cette même cartouche, en se référant au dessin annexé dans lequel :
La figure 1 représente, en coupe axiale, une forme d'exécution de la pièce perforatrice et injectrice de liquide;
La figure 2 représente, en coupe axiale, une forme d'exécution de la cartouche;
La figure 3 représente la cartouche de la figure 2 placée dans la pièce collectrice de produit liquide et coiffée de la pièce perforatrice et injectrice de liquide lors de l'utilisation de la cartouche;
La figure 4 représente une forme d'exécution particulière de la pièce collectrice de produit liquide;
La figure 5 est une vue à échelle agrandie de la partie de la pièce collectrice de produit liquide indiquée par un cercle à la figure 4;
La figure 6 représente une autre forme d'exécution de la pièce collectrice de produit liquide;
La figure 7 est une vue à plus grande échelle de la partie de la pièce collectrice selon la figure 6 indiquée par un cercle à cette figure;
La figure 8 représente une autre forme d'exécution de la pièce collectrice de produit liquide;
La figure 8a est une vue en coupe selon la ligne B-B de la partie de la pièce collectrice indiquée par un cercle à la figure 8;
La figure 9 est une vue en coupe du fond d'une cartouche selon l'invention après utilisation de cette cartouche au moyen de la pièce collectrice des figures 8 et 8a;
La figure 10 est une vue en coupe, similaire aux figures 5 et 7, montrant une autre forme d'exécution d'une pointe perforatrice faisant partie de la pièce collectrice de produit liquide;
La figure 11 est une vue schématique en coupe illustrant un mode de fabrication d'une pointe perforatrice constituant une variante de la forme d'exécution de cette pointe représentée à la figure 10;
Les figures 12 (a) et 12 (b) représentent, en coupe axiale, une autre forme d'exécution de la cartouche;
La figure 13 est une vue en coupe axiale d'une autre forme d'exécution de la pièce collectrice de produit liquide.
La Fig. 14 est une vue en plan schématique, de dessus, correspondant à encore une autre forme d'exécution de la pièce collectrice de produit liquide;
La Fig. 15 est une vue schématique, en coupe verticale, de la pièce collectrice représentée à la Fig. 14, selon les plans indiqués par les lignes A-A et B-B sur cette dernière figure;
La Fig. 16 est une vue en plan d'une paroi filtre, munie d'organes perforateurs, destinée à être montée dans la pièce collectrice représentée aux figures 14 et 15; et
La Fig. 17 est une vue partielle en coupe verticale, à échelle agrandie, de la paroi filtre représentée à la Fig. 16, selon le plan indiqué par la ligne XVII-XVII sur cette dernière figure.

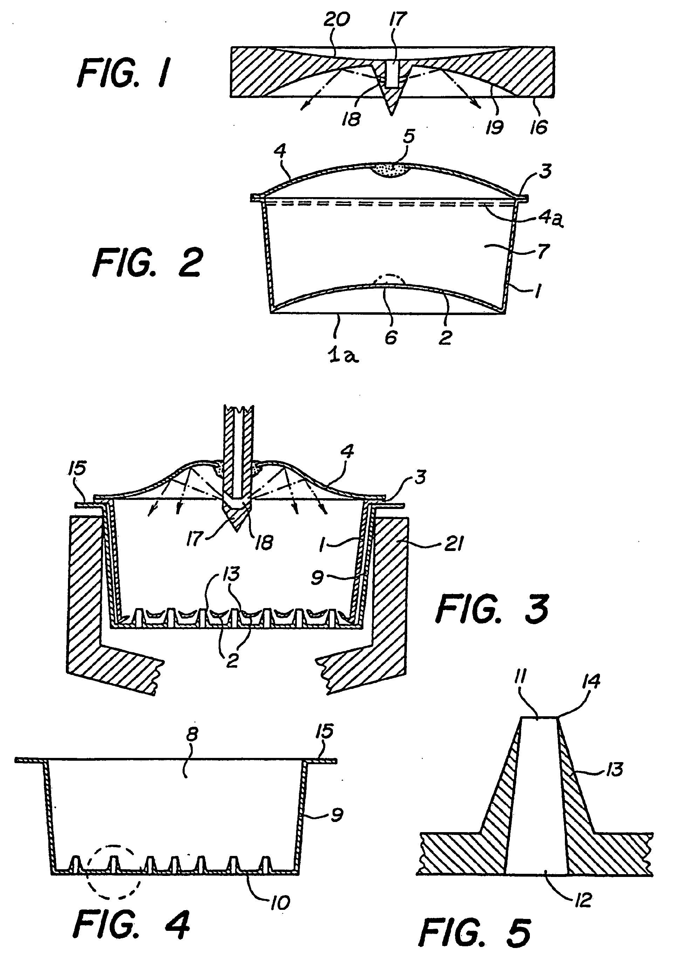

La cartouche représentée à la figure 2 est constituée d'une enveloppe étanche comprenant une paroi latérale 1 fermée à sa base par une paroi 2 faisant partie intégrante de l'enveloppe. Avantageusement, cette enveloppe est constituée en tôle d'aluminium ayant une épaisseur de 30 à 110 micro mètres, une épaisseur de 50 micro mètres convenant particulièrement bien. La forme générale de la cartouche est tronconique avec une conicité, par rapport à l'axe de la cartouche, de 1 à 10°, de préférence de l'ordre de 3°, cet angle convenant particulièrement bien en vue de faciliter l'introduction et la sortie de la cartouche dans la pièce collectrice de produit liquide.

L'enveloppe extérieure de la cartouche peut également être avantageusement en matière plastique. En particulier, l'enveloppe extérieure de la cartouche peut être constituée par un godet réalisé par thermoformage à partir d'une feuille de résine synthétique.

La paroi inférieure 2 de la cartouche a de préférence une forme de voûte concave dont la partie centrale se trouve à une distance de l'ordre de 1 à 20 mm par rapport à la base géométrique de la cartouche, de préférence à une distance de 8 à 10 mm. La forme de cette voûte peut être, notamment, arrondie, ou encore tronconique.

La paroi 2, constituant le fond de la cartouche, pourrait également être plate sur toute sa superficie en étant située dans un plan parallèle au plan dans lequel se trouve le bord inférieur circulaire 1 a de la paroi latérale 1 de la cartouche, le premier de ces deux plans étant placé en retrait, par rapport au second, à l'intérieur du volume global occupé par la cartouche, la distance entre ces deux plans étant, également, de l'ordre de 1 à 20 mm et, de préférence, de 8 à 10 mm.

La paroi supérieure 4 de la cartouche telle que représentée à la Fig. 2 est réunie, dans sa partie périphérique, à la paroi latérale 1, de la cartouche en formant une bordure 3. La jonction entre la paroi supérieure 4 et la paroi latérale 1 de la cartouche peut être réalisée par tous moyens appropriés, notamment par thermosoudage ou par sertissage. La paroi supérieure 4 a avantageusement une forme bombée, dépassant, par rapport au plan du rebord 3 d'une distance de 1 à 20 mm, de préférence 7 mm. Cependant la paroi 4 pourrait également être plane ou avoir une forme tronconique. Conformément à une variante de la forme d'exécution représentée à la figure 2, la membrane 4 peut être agencée de manière à pouvoir être arrachée par pelage le long de la bordure 3 et la cartouche comprend une membrane poreuse 4a, elle-même fixée sur la bordure 3, cette membrane étant destinée à retenir la substance remplissant la cartouche lorsque la paroi supérieure 4 est arrachée. Avantageusement, la partie centrale 5 de la paroi supérieure 4 de la cartouche est munie d'un petit logement 5 qui est, par exemple, de forme générale cylindrique. Avantageusement, le fond du logement 5 est affaibli. De même, la paroi inférieure 2 peut également présenter à sa partie supérieure un petit logement 6 par exemple, de forme générale cylindrique. Conformément à une forme d'exécution préférée, le fond de ce logement 6 est également affaibli.

Conformément à une autre forme d'exécution de la cartouche (non représentée), la paroi supérieure 4 de la cartouche est plate, mais comporte une pluralité de parties d'affaiblissement allongées, constituées chacune par une rainure en creux dont le fond a une épaisseur moindre que le reste de la paroi, destinées à permettre la déchirure de la paroi 4, le long de ces lignes, lorsque l'on applique, sur la paroi supérieure 4, une pression uniforme, au moment où l'on fournit de l'eau chaude ou de la vapeur sous pression provenant d'une machine à café. Avantageusement, ces parties d'affaiblissement allongées peuvent être disposées radialement en partant du centre de la paroi 4.

L'intérieur 7. de la cartouche est rempli d'une ou plusieurs substance(s) pulvérulente(s), ou encore d'au moins une substance liquide ou pâteuse, ou d'un mélange d'au moins une substance pulvérulente et d'au moins une substance liquide ou pâteuse. Par exemple, comme substance pulvérulente, il peut s'agir de café torréfié moulu, de feuilles de thé torréfiées, de tisane, de produit chocolaté. La substance pulvérulente peut être également constituée par les ingrédients d'une soupe ou d'un potage ou encore par ceux d'une sauce liquide ou soluble.

Comme représenté à la figure 3, la cartouche est placée, lors de son utilisation, à l'intérieur d'une pièce collectrice de produit liquide, qui constitue un dispositif d'extraction d'un appareil pour la préparation de boisson de type usuel, telle qu'une machine à café dite expresso. La pièce collectrice de liquide représentée à la figure 4 est composée d'un godet tronconique 9, dont la conicité correspond à un angle de 1 à 10°, de préférence 3°, qui est fermé à sa partie inférieure par une paroi 10. La paroi 10 présente des orifices correspondant avantageusement à une surface de passage de 2 à 20 % par rapport à la surface totale de la paroi 10. Ces orifices, dont l'un est représenté à la figure 5, à échelle agrandie, peuvent avantageusement avoir un diamètre d'entrée de 400 micro mètres et un diamètre de sortie de 500 micro mètres. Conformément à une forme d'exécution préférée, l'orifice présente une protubérance 13 tronconique qui fait saillie à partir de la surface de la paroi intérieure de la pièce collectrice sur une hauteur de l'ordre de 500 micro mètres à 5 mm, de préférence 1 mm. Le bord supérieur 14 de l'orifice 13 est tranchant, afin de pouvoir percer ou déchirer la paroi inférieure 2 de la cartouche. Avantageusement, la pièce collectrice de liquide présente, à sa partie supérieure, une bordure 15 destinée à s'adapter à la partie périphérique inférieure 16 de la pièce perforatrice et injectrice de liquide représentée à la figure 1. Avantageusement, on peut utiliser un joint d'étanchéité (non représenté) par exemple en caoutchouc, pour l'adaptation de la bordure 15 contre la pièce perforatrice et injectrice de liquide lorsque la pièce collectrice de liquide et la pièce perforatrice et injectrice de liquide sont montées dans l'appareil servant à la préparation du produit liquide.

Comme on le voit à la figure 1, la pièce perforatrice et injectrice de liquide présente, à sa partie centrale, une pointe 17 comprenant un canal d'introduction de liquide communiquant avec une pluralité de buses de projection de liquide 18 dont les axes forment avantageusement un angle obtus avec l'axe de la pointe 17. Le nombre des buses de projection de liquide peut être quelconque, mais de préférence au moins de 3, et leur diamètre peut par exemple varier entre 100 micro mètres et 900 micro mètres, avec une valeur préférentielle de 500 micro mètres.

La partie inférieure de la pièce perforatrice et injectrice de liquide forme une voûte concave 19 qui est de préférence conformée de façon à correspondre à la forme bombée de la paroi supérieure 4 de la cartouche. La pièce perforatrice et injectrice de liquide représentée à la figure 1 est destinée à être adaptée, par tous moyens appropriés, par exemple par vissage, sur le dispositif d'injection de liquide faisant partir de l'appareil dans lequel on utilise la cartouche, par exemple une machine à café espresso de type usuel.

Dans la position d'utilisation représentée à la figure 3, la cartouche est placée dans le logement 8 de la pièce collectrice 9 de produit liquide qui est elle-même placée dans un logement 21 faisant partie d'un organe de fixation, par exemple tel q'une "poignée" ou "cuillère", fixé sur l'appareil de production d'eau chaude ou de vapeur par tout moyen approprié, par exemple, par un dispositif de fixation à baïonnette.

Lors de la mise en place de l'organe de fixation portant la pièce collectrice 9 de produit liquide, dans laquelle est placée la cartouche, dans l'appareil d'utilisation, le sommet de la cartouche est perforé par la pièce perforatrice et injectrice et le liquide permettant la préparation du produit liquide est injecté sous pression par les orifices 18, dans la cartouche, en formant des jets qui frappent la surface de la paroi intérieure de la partie supérieure 4 de la cartouche, ce qui a pour effet d'assurer une répartition régulière du liquide dans toute la surface supérieure de la substance pulvérulente placée dans la cartouche. Avantageusement, cette injection de liquide est effectuée sous pression relativement élevée pouvant atteindre et même dépasser une valeur de 15 bars.

Cette pression élevée a d'abord pour effet de déformer la membrane inférieure 2 de la cartouche puis, après un certain temps qui est fonction de la résistance de cette membrane et du débit du liquide, de presser cette membrane contre les pointes 13 du fond de la pièce collectrice 9 de produit liquide ce qui a pour effet que les pointes 13 percent ou déchirent la membrane 2 de la cartouche en provoquant l'écoulement régulier du produit liquide à-travers les trous pratiqués dans chacune de ces pointes. Ainsi, le produit liquide s'écoule directement dans le logement 21 de l'organe de fixation qui forme une petite chambre collectrice de liquide (non représentée) qui amène le produit liquide dans un récipient tel qu'une tasse ou un gobelet.

Après préparation et écoulement du produit liquide, on desserre l'organe de fixation comportant le logement récepteur 21 et on le détache de l'appareil utilisé pour la préparation du produit liquide, telle que la machine à café espresso, en entraînant la pièce collectrice 9 de produit liquide et la cartouche. Ensuite, on effectue un mouvement de renversement brusque qui permet de détacher la cartouche de la pièce collectrice 9 en entraînant la cartouche et son contenu. Conformément à une forme d'exécution particulièrement avantageuse, la paroi inférieure 2 de la cartouche est réalisée en un matériau suffisamment élastique pour assurer le nettoyage des pointes 13 en évitant ainsi l'accrochage sur ces pointes de particules de substance pulvérulente provenant de l'intérieur de la cartouche.

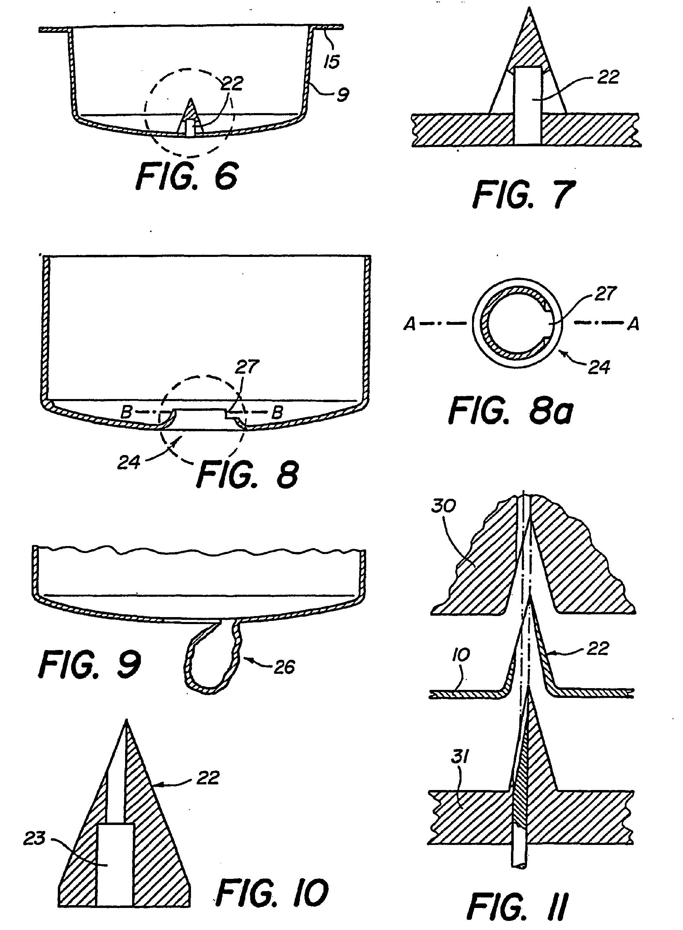

Dans le cas ou la substance contenue à l'intérieur de la cartouche est une substance liquide ou soluble, par exemple une substance soluble permettant la préparation de potage ou de café soluble, ou encore d'une sauce liquide ou soluble, on utilise de préférence une pièce collectrice 9 de produit liquide correspondant à la forme d'exécution illustrée à la figure 6. Conformément à cette forme d'exécution, la paroi inférieure de la pièce collectrice de produit liquide présente une seule pointe centrale 22 agencée de la manière représentée à la figure 7.

Comme on le voit à la figure 7, la pointe centrale 22 fait saillie à partir du fond de la pièce collectrice dont la paroi inférieure forme une chambre collectrice de forme incurvée ayant une profondeur de l'ordre de 2 à 15 mm, de préférence 6 mm. Comme on le voit à la figure 7, la pointe 22 est percée à sa base d'un orifice d'écoulement pour le produit liquide.

La forme d'exécution de la pièce collectrice de produit liquide représentée à la figure 8 est analogue à celle des figures 6 et 7 mais elle présente, au lieu de la pointe centrale 22, une protubérance de forme incurvée, présentant une arête supérieure tranchante 27, percée en son milieu par un orifice 24 traversant la paroi du fond de la pièce collectrice. Avantageusement, cette protubérance a une hauteur de 0,5 à 3 mm, et plus particulièrement de l'ordre de 1 mm, afin de permettre le découpage de la membrane inférieure 26 de la cartouche par son arête supérieure tranchante. La forme de cette arête, vue en plan, peut être circulaire mais elle est de préférence en forme de C, comme représenté à la figure 8a, ou bien en forme de fer à cheval. Ainsi, lors de l'utilisation de la cartouche, la paroi 26 de la membrane inférieure de celle-ci ne se détache pas complètement du reste de cette membrane mais reste accrochée à celle-ci comme représenté à la figure 9. Ainsi , le morceau de membrane découpé ne risque pas d'être entraîné lors de l'écoulement des produits liquides.

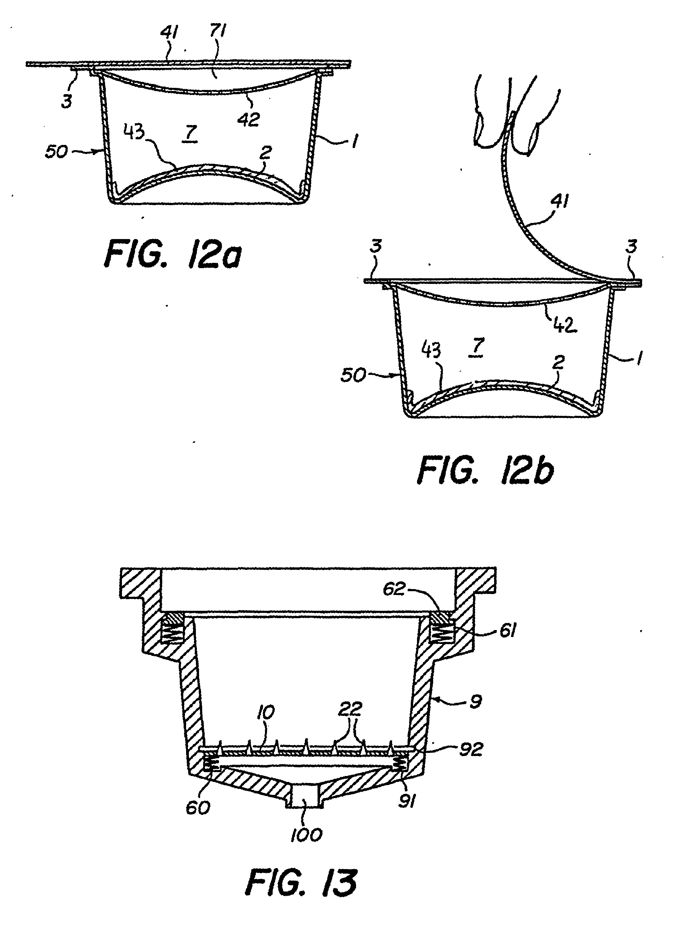

La pointe perforatrice 22 représentée à la figure 10 est percée d'un canal traversant 23 pour l'écoulement du produit liquide. L'axe du canal 23 est décentré rar rapport à l'axe de la pointe 22. Ceci permet de diminuer le risque d'obturation du canal 23 par une ou plusieurs particules solides, telles qu'un grain de substance à extraire ou à dissoudre, ou encore un lambeau de matériau d'emballage, éventuellement entraînées avec le produit liquide. Le canal 23 présente deux alésages concentriques successifs de diamètres différents, ce qui facilite l'entraînement de particules solides, ayant malencontreusement pénétré dans l'alésage le plus étroit, ainsi que le lavage du canal, par exemple par un courant d'eau chaude. Dans le même but, le canal 23 pourrait avoir une section longitudinale conique, comme dans le cas de la forme d'exécution de la pointe 22 représentée à la figure 11.

Pour la réalisation d'une pointe perforatrice telle que représentée à la figure 10, on peut procéder, par exemple, en perçant le canal 23 avec son axe décentré par rapport à celui de la pointe 22 ou encore en tronquant, par fraisage, par exemple avec un angle de fraisage de 30°, une pointe 22 présentant initalement un canal 23 centré.

La pointe perforatrice 22 représentée à la figure 11 est obtenue par étampage d'une plaque, par exemple en acier inoxydable, destinée à constituer la paroi filtre 10 du godet 9 de la pièce collectrice de liquide (telle que représentée, par exemple, à la figure 4). Cet étampage est effectué en utilisant une matrice femelle 30 et une matrice mâle 31, ces deux matrices étant, de préférence, agencées de manière à permettre l'obtention simultanée de toutes les pointes 22 de la paroi filtre 10, constituant la pluralité de pointes identiques représentées, par exemple aux figures 3 et 4.

La cartouche 50 représentée aux figures 12 (a) et 12 (b) est similaire à celle qui est illustrée à la figure 2, mais sa partie supérieure est fermée par une membrane d'obturation plane 41, aussi étanche que la paroi latérale 1 et le fond 2 de la cartouche 50.

Une membrane intérieure 42, percée d'une pluralité de petits orifices (éventuellement légèrement obturés), laissant passer l'eau ou la vapeur, mais retenant les particules solides de la substance à extraire ou dissoudre contenue à l'intérieur 7 de la cartouche 50, est fixée, par exemple par thermosoudage de sa partie périphérique, à la partie supérieure de la cartouche 50, en dessous de la membrane d'obturation 41.

Comme représenté aux figures 12 (a) et 12 (b), la membrane intérieure 42 a, avantageusement, une forme légèrement concave qui peut être, par exemple, réalisée par thermoformage d'une feuille initialement plane.

Ainsi, dans l'état initial de la cartouche, illustré à la figure 12 (a), un compartiment 71 est formé entre la membrane d'obturation 41 et la membrane intérieure 42. Ce compartiment 71 peut avantageusement servir à contenir une substance, à extraire ou dissoudre, distincte de celle qui est contenue dans le compartiment intérieur principal 7 de la cartouche 50, ces deux substances restant ainsi séparées l'une de l'autre et leurs produits d'extraction ou de dissolution n'étant mélangés qu'au moment de l'utilisation de la cartouche.

Avantageusement, la cartouche peut comporter une membrane intérieure filtrante 43 placée au fond de la cartouche, par exemple en recouvrant la paroi inférieure 2, comme représenté aux Figs 12(a) et 12(b), en étant fixée, par exemple par thermosoudage, sur la surface intérieure de la paroi latérale 1 ou de la paroi inférieure 2 de la cartouche.

Cette membrane filtrante 43 a pour fonction de retenir les particules de substance solide contenue dans la cartouche, afin d'empêcher le bouchage des canaux d'écoulement de liquide dans la ou les pointes perforatrices 13 ou 22 par les particules de cette substance ayant une finesse suffisante pour risquer de s'introduire dans ces canaux tout en étant trop grosses pour passer librement à travers ces derniers. La membrane filtrante 43 est, de préférence, suffisamment souple et résiliente pour ne pas être elle-même percée par les pointes 13 ou 22. Ainsi, grâce à la membrane filtrante 43, tout contact direct entre les particules solides, contenues dans la cartouche, et les pointes perforatrices 13 ou 22 est évité. Avantageusement, la membrane filtrante 43, de même que la membrane intérieure 42, placée au-dessus de la substance contenue dans la cartouche, sont constituées par des fibres assemblées sous forme d'une feuile de matériau "non-tissé", ces fibres consistant, par exemple, en un mélange de fibres de polymère synthétique et de fibres cellulosiques.

Comme on le voit à la figure 12 (b), la membrane d'obturation 41 peut être arrachée par l'utilisateur de la cartouche 50 juste avant l'introduction de cette-ci dans la pièce collectrice de produit liquide.

Le godet 9 collecteur de produit liquide, qui constitue la pièce collectrice de produit liquide, représentée à la figure 13, est muni d'une paroi filtre 10 garnie d'une pluralité de pointes perforatrices 22 percées, cette paroi filtre 10 étant posée sur un coussinet élastique 60 s'appuyant dans une rainure périphérique 91 ménagée sur le fond de la partie intérieure du godet collecteur 9 de produit liquide. La paroi filtre 10 est maintenue en place de manière amovible au moyen d'un joint d'étanchétié torique (joint "O-ring") (non représenté) logé dans une rainure périphérique 92 au fond du godet collecteur 9.

Ainsi, la paroi filtre 10 peut être facilement enlevée en vue de son nettoyage. D'autre part, le déplacement vertical de la paroi filtre 10, sous l'effet de la force élastique exercée par le coussinet 60, facilite l'extraction des cartouches usagées.

Le godet 9, représenté à la figure 13, est, en outre, muni, à la périphérie de sa partie supérieure, d'un anneau élastique 61 garni d'un joint annulaire 62, cet anneau 61 ayant pour fonction de permettre de plaquer la bordure 3 de la cartouche contre l'organe (dit "douche") distributeur de l'eau ou de la vapeur de la machine utilisée, telle qu'une machine à café du type dit "Espresso". Ainsi, on obtient une bonne étanchéité de la jonction entre cette "douche" et la cartouche et on peut rattraper le jeu existant entre les positions verticales des "douches" selon les diverses marques de machine.

Il est à remarquer que l'on pourrait utiliser, au lieu d'une paroi filtre 10, un couteau annulaire chassé dans l'orifice inférieur 100 du porte-cartouche 9.

Avantageusement, les pointes perforatrices 22 ont chacune la forme d'une pyramide, par exemple à base triangulaire. De bons résultats, en ce qui concerne la facilité et la reproductibilité du percement de la paroi inférieure 2 de la cartouche, ont été obtenus avec une valeur de l'angle au sommet des pointes perforatrices pyramidales 22 de l'ordre de 30°.

Le godet collecteur 9 ainsi que la paroi 10 et les pointes perforatrices 22 peuvent être avantageusement réalisées en une matière plastique dure et résistant à la chaleur, notamment en résine de polysulfone. Les pointes perforatrices 22 peuvent comporter un ou plusieurs canaux pour le passage du produit liquide, ce canal ou ces canaux débouchant, par exemple, dans le cas où les pointes perforatrices 22 sont pyramidales, au voisinage de la partie supérieure d'au moins l'une des faces latérales.

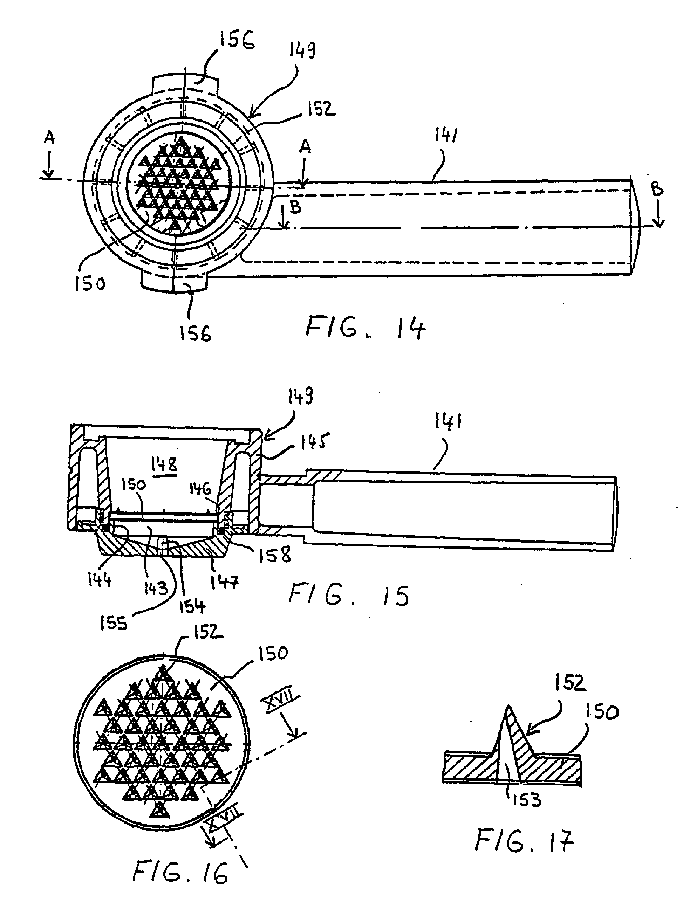

La pièce collectrice 149 de produit liquide, représentée aux figures 14 et 15, est réalisée sous forme d'une poignée destinée à être adaptée, par un dispositif de fixation à baïonnette, sur un appareil d'alimentation en eau bouillante ou vapeur tel que ceux qui font partie des machines à café "espresso" de type usuel.

Cette pièce collectrice 149 comprend un logement 148, agencé pour recevoir une cartouche selon l'invention (non représentée), un manche de poignée 141, constituant une pièce venue de moulage avec le corps creux 145, dont l'intérieur constitue le logement 148, un embout démontable 147 vissé à la partie inférieure du corps 145, et une paroi filtre 150 démontable qui est fixée dans la pièce collectrice 149 par pincement entre un rebord inférieur 146, situé à la partie inférieure de la paroi intérieure du logement 148, et la surface supérieure d'une paroi annulaire 144 délimitant un compartiment collecteur de liquide 143 à l'intérieur de l'embout 147.

La paroi filtre 150 est munie d'une pluralité d'organes perforateurs 152 en forme de pyramides à base triangulaire, percés chacun d'un trou d'écoulement de liquide 153, comme on le voit mieux à la Fig. 17.

L'étanchéité du raccordement entre la partie inférieure du corps 145 et l'embout 147 est obtenue au moyen d'un joint torique élastique 158.

L'écoulement du liquide hors du compartiment collecteur 143 s'effectue au moyen d'un canal horizontal allongé 154, ménagé dans le fond du compartiment 143, et de deux orifices d'écoulement 155 (dont un seul est visible à la Fig. 15) raccordés en positions symétriques à chacune des extrémités du canal 154.

L'étanchéité du raccordement entre la partie supérieure du corps 145 et l'embouchure d'amenée d'eau chaude ou de vapeur de l'appareil d'alimentation (non représenté) est réalisée au moyen d'un joint annulaire, non représenté, qui vient s'appuyer contre une surface circulaire, de diamètre correspondant à celui de ce joint, lorsque la pièce collectrice 149 est montée sur cette embouchure d'amenée d'eau chaude ou de vapeur, par fixation à baïonnette de manière connue en soi, au moyen de deux cames 156 disposées en positions diamétralement opposées en faisant saillie à partir de la partie supérieure du corps 145.

Le matériau constitutif de la paroi de la cartouche qui vient d'être décrite peut être utilisé en très petite quantité et consister en une matière biodégradable. On peut utiliser tout matériau approprié, choisi en fonction de la substance à protéger contenue dans la cartouche. Par exemple, on peut utiliser l'aluminium ou d'autres matériaux métalliques. On peut également utiliser des feuilles de matière plastique et, notamment, des matières plastiques présentant une certaine élasticité, et/ou facilement thermodéformables.

La cartouche selon l'invention peut être utilisée dans n'importe quel appareil de type connu pour la préparation de boisson de type usuel, les machines à café dites expresso, en utilisant un dispositif de fixation approprié pour l'adaptation de la pièce perforatrice et injectrice de liquide sur l'orifice d'un tel appareil délivrant le liquide ou la vapeur permettant la préparation du produit liquide.

La cartouche selon l'invention se distingue des cartouches de l'art antérieur, notamment par le fait qu'elle permet l'optimalisation de la préparation du produit liquide en particulier grâce au fait qu'elle permet un certain temps de pré-mouillage, d'aération, de dissolution des matières solubles, de captage des arômes volatils, pendant une durée optimale, avant que la paroi du fond de la cartouche ne soit percée pour permettre l'écoulement du produit liquide, tel qu'une boisson, un potage ou une sauce, préparée dans la cartouche.

Bien entendu, les dimensions et la forme de la cartouche peuvent être convenablement adaptées afin de permettre son utilisation dans tous les appareils de type connu, notamment dans une machine à café de type dit "mocca italien".

## Revendications

1. Cartouche contenant une dose d'au moins une substance pour la préparation d'un produit liquide au moyen d'un liquide et/ou d'une vapeur introduits sous pression dans la cartouche, cette cartouche comprenant une enveloppe étanche formant une paroi latérale ainsi que deux parois dont l'une constitue le fond de la cartouche et dont l'autre ferme l'extrémité opposée de la cartouche, **caractérisée par le fait qu'**au moins une partie du fond de la cartouche est agencée de manière à pouvoir subir, sans se rompre, une déformation, en s'éloignant, sous l'effet de l'introduction dudit liquide et/ou vapeur à l'intérieur de la cartouche, de l'extrémité de la cartouche opposée au fond de celle-ci.

2. Cartouche selon la revendication 1, **caractérisée par le fait que** le fond de la cartouche forme une voûte concave.

3. Cartouche selon la revendication 1, **caractérisée par le fait que** la partie supérieure de la cartouche a une forme bombée.

4. Cartouche selon les revendications 2 et 3, **caractérisée par le fait que** le fond et la partie supérieure de la cartouche ont des formes complémentaires, de manière à permettre l'emboîtage d'une pluralité de cartouches empilées les unes sur les autres.

5. Cartouche selon la revendication 1, **caractérisée par le fait que** le fond de la cartouche et/ou la paroi obturant la partie supérieure de la cartouche présentent au moins une partie affaiblie.

6. Cartouche selon la revendication 1, **caractérisée par le fait qu'**elle comporte une cloison intérieure perméable aux liquides mais capable de retenir une substance pulvérulente contenue dans la cartouche.

7. Cartouche selon la revendication 1, **caractérisée par le fait qu'**elle comporte une paroi supérieure agencée de manière à permettre d'enlever au moins une partie de cette paroi avant l'utilisation de la cartouche.

8. Cartouche selon la revendication 7, **caractérisée par le fait qu'**elle comprend une membrane poreuse agencée de manière à retenir la substance contenue dans la cartouche après enlèvement d'au moins une partie de la paroi supérieure de la cartouche.

9. Cartouche selon l'une des revendications 1 à 8, **caractérisée par le fait qu'**elle comprend une membrane intérieure filtrante placée au fond de la cartouche.

10. Pièce collectrice de produit liquide pour la cartouche selon la revendication 1, **caractérisée par le fait qu'**elle comprend au moins un logement délimité entre une ouverture pour l'introduction de la cartouche et une paroi traversée d'au moins un orifice pour le passage du produit liquide et munie de moyens pour perforer le fond de la cartouche, lorsque celui-ci a atteint un certain degré de déformation par rapport à sa forme initiale, en permettant l'écoulement dudit produit liquide à travers ledit orifice.

11. Pièce perforatrice et injectrice de liquide pour la cartouche selon la revendication 1, cette pièce faisant partie intégrante d'un appareil ou dispositif d'alimentation en liquide ou étant agencée de manière à pouvoir être adaptée sur la partie d'un tel appareil ou dispositif, par laquelle s'effectue l'alimentation en liquide, **caractérisée en ce qu'**elle présente une paroi conformée pour pouvoir être mise en appui contre la paroi supérieure de la cartouche et des moyens pour pratiquer au moins une ouverture dans cette dernière lors de cette mise en appui, en mettant ainsi l'intérieur de la cartouche en communication avec au moins un canal d'injection de liquide provenant dudit appareil ou dispositif.

12. Pièce collectrice selon la revendication 10, **caractérisée par le fait que** la paroi d'obturation du logement récepteur de la cartouche est traversée d'au moins un orifice d'écoulement prolongé, en direction de l'intérieur dudit logement, par une protubérance dont l'extrémité est terminée par une pointe ou une arête coupante, cette protubérance présentant au moins un canal d'écoulement de liquide en communication avec ledit orifice.

13. Pièce collectrice selon la revendication 10, **caractérisée par le fait que** ladite arête coupante a, vue en plan, une forme générale incurvée.

14. Pièce collectrice selon la revendication 12, **caractérisée par le fait que** l'arête coupante a une forme en C ou en fer à cheval.

15. Pièce perforatrice et injectrice selon la revendication 11, **caractérisée par le fait que** lesdits moyens pour pratiquer ladite ouverture dans la paroi supérieure de la cartouche sont constitués par au moins une protubérance dont l'extrémité est munie d'au moins une pointe ou une arête coupante, cette ou ces protubérance(s) faisant saillie à partir de la paroi de la pièce perforatrice et injectrice, conformée pour venir en appui contre la paroi supérieure de la cartouche, et étant associée(s) avec au moins un canal d'injection de liquide traversant la pièce perforatrice et injectrice, de façon à permettre l'injection dans la cartouche du liquide délivré par ledit appareil ou dispositif d'alimentation.

16. Pièce perforatrice et injectrice selon la revendication 14, **caractérisée par le fait que** ladite protubérance est terminée par une pointe et qu'elle présente un canal d'injection de liquide communiquant avec une pluralité de buses de projection de liquide orientées de manière à produire une série de jets de liquide dirigés selon plusieurs angles différents contre la surface intérieure de la paroi supérieure de la cartouche, après pénétration de ladite protubérance à l'intérieur de celle-ci.

17. Procédé de préparation d'un produit liquide, selon lequel on introduit un liquide et/ou une vapeur sous pression dans une cartouche, contenant une dose d'au moins une substance, apte à former ledit produit au moyen dudit liquide et/ou vapeur, et on recueille ce produit à l'extérieur de la cartouche, **caractérisé en ce que** l'on place une cartouche, qui comprend une enveloppe étanche, formant une paroi latérale ainsi que deux parois dont l'une constitue le fond de la cartouche et l'autre ferme l'extrémité opposée de la cartouche, et dont au moins une partie du fond est agencée de manière à pouvoir subir, sans se rompre, une déformation d'une amplitude prédéterminée, en s'éloignant de l'extrémité de la cartouche opposée au fond de celle-ci, sous l'effet de l'introduction dudit liquide et/ou vapeur, dans un logement d'une pièce collectrice, ce logement étant délimité entre une ouverture pour l'introduction de la cartouche et une paroi, traversée d'au moins un orifice pour le passage du produit liquide et munie de moyens pour perforer le fond de la cartouche, lorsque celui-ci a atteint un certain degré de déformation par rapport à sa forme initiale, et l'on introduit ensuite dans la cartouche une quantité prédéterminée dudit liquide et/ou vapeur, de manière à provoquer ladite déformation du fond de la cartouche et sa perforation par lesdits moyens, en permettant l'écoulement dudit produit liquide à travers ledit ou lesdits orifice(s).

18. Appareil et cartouche pour la préparation d'un produit liquide par introduction, sous pression, d'un liquide et/ou d'une vapeur dans une cartouche contenant une dose d'au moins une substance apte à former ledit produit au moyen dudit liquide et/ou vapeur, cet appareil comprenant des moyens d'alimentation de la cartouche en liquide et/ou vapeur ainsi que des moyens pour recueillir le produit liquide à l'extérieur de la cartouche, **caractérisés en ce que** la cartouche comprend une enveloppe étanche, formant une paroi latérale ainsi que deux parois dont l'une constitue le fond de la cartouche et l'autre ferme l'extrémité opposée de la cartouche, au moins une partie du fond de la cartouche étant agencée de manière à pouvoir subir, sans se rompre, une déformation d'une amplitude prédéterminée, en s'éloignant de l'extrémité de la cartouche opposée au fond de celle-ci, sous l'effet de l'introduction dudit liquide et/ou vapeur, et **en ce que** lesdits moyens pour recueillir le produit liquide comprennent au moins une pièce collectrice comportant au moins un logement délimité entre une ouverture pour l'introduction de la cartouche et une paroi traversée d'au moins un orifice pour le passage du produit liquide et munie de moyens pour perforer le fond de la cartouche, lorsque celui-ci a atteint un certain degré de déformation par rapport à sa forme initiale.
